# EUROPEAN PATENT APPLICATION

(11) **EP 3 832 575 A1**
(43) Date of publication of application: **09.06.2021**
(21) Application number: 18933600.1
(22) Date of filing: 11.09.2018
(51) Int. Cl.: G06Q 30/02, G06Q 30/06

(54) **VIRTUAL STORE PROVISION SYSTEM**

(71) Applicant: Nippon Food Manufacturer Co., Sapporo-shi, Hokkaido, 063-0841 (JP)
(72) Inventor: TOBE, Ken Luis, Sapporo-shi, Hokkaido 063-0841 (JP)
(74) Representative: Schön, Christoph
(86) International application number: PCT/JP2018/033630
(87) International publication number: WO 2020/053961

(57) **Abstract**

Provided is a virtual store provision system that enables an individual or a group to easily open a virtual store as intended. A virtual store provision system 1 includes: an address assignment unit 101 configured to assign a web address of a virtual store to each member 13; a member item posting unit 102 configured to post an other-person sales item 20 selected by the member 13 from other-person sales items 20 of an other-person virtual store 19, on a member virtual store 23 as a hyperlinked member item 24; a D/B 10 configured to accumulate hyperlink operation history by a viewer 17 for each member item 24; and a privilege grant unit 103 configured to grant a privilege to the member 13 based on the operation history.

## Description

### Technical Field

The present invention relates to a virtual store provision system that provides virtual stores on the Internet to members.

### Background Art

It is common nowadays for Internet users to acquire various information, purchase products, etc. through portal sites. For example, Patent Literature 1 discloses a portal site provision system that enables each user to build his or her own portal site. With this system, each user inputs his or her personal information (e.g. member information) to register as a user at a portal server. After the registration, each user receives content data of a portal design page from the portal server via a browser, and builds his or her own portal site using the portal design page.

The portal design page includes design items such as "designate specific content" and "designate external content". The item "designate specific content" allows the user to paste a hyperlinked content image or the like to his or her portal site by drag and drop. The item "designate external content" allows the user to hyperlink text or the like of his or her portal site to an image or the like present on the Internet other than specific content.

Patent Literature 2 discloses a user interface capable of changing, for each visitor (viewer) of a web page, the display mode of the web page according to the visitor's interest (e.g. interest in exercise activity and viewing information). In detail, the user interface analyzes the interest level of the visitor, and highlights information with a higher interest level in the same web page by, for example, displaying the information in a larger display size.

Patent Literature 3 discloses a system in which a first computer system provides a software component (widget) to a second computer system. A user downloads the software component from the second computer system, and incorporates the software component into his or her user interface. The user can start the software component in his or her user interface, and add, as appropriate, a media content item on the Internet found as a result of search to a playlist of his or her user interface with a hyperlink.

### Citation List

### Patent Literatures

Patent Literature 1: Japanese Patent Application Laid-Open No. 2006-318180
Patent Literature 2 : Japanese Patent Application Laid-Open No. 2013-541068
Patent Literature 3 : Japanese Patent Application Laid-Open No. 2016-529583

### Summary of Invention

### Technical Problem

However, in the case where an ordinary user prepares products on his or her own and open a store, significant efforts, funds, and skills are required even when the store is a virtual store on the Internet. There is also risk of deficit operation.

Many people rather wish that they could easily do business as a sideline while transmitting information, without requiring great profits. In such a case, since virtual stores on the network can be easily accessed from anywhere, similar virtual stores tend to be subjected to natural selection.

In view of the above, the present invention has an object of providing a virtual store provision system that enables an individual or a group wishing to transmit information to easily open a virtual store as intended without funds or skills and expect to earn some profits.

### Solution to Problem

A virtual store provision system according to the present invention includes: an address assignment unit configured to assign, to each member, a web address of a virtual store of the member; a member item posting unit configured to post an other-person sales item selected by the member from other-person sales items posted and sold on an other-person virtual store on an Internet, on the virtual store of the member as a member item hyperlinked to the selected other-person sales item; an operation history database configured to accumulate hyperlink operation history by a viewer, for each member item of the member; and a privilege grant unit configured to grant a privilege to the member based on the operation history in the operation history database.

According to the present invention, each member can do business simply by posting a sales item of another person on the virtual store of the member with a hyperlink. Therefore, an individual or a group wanting to disseminate information can easily open a virtual store as intended without funds or skills and expect to earn some profits (privileges).

Preferably, the virtual store provision system according to the present invention includes: a segment information collection unit configured to collect segment information indicating which segment member items of the virtual store of the member are specialized to; and a segment information provision unit configured to provide the segment information collected by the segment information collection unit, in response to a request from a predetermined requester.

With this structure, the virtual store provision system can effectively use the segment information.

Preferably, in the virtual store provision system according to the present invention, an answer of the member to a segment survey questionnaire issued to the member is collected, and the segment information is generated based on the collected answer to the segment survey questionnaire.

With this structure, appropriate segment information can be efficiently collected and generated.

Preferably, in the virtual store provision system according to the present invention, a number of overlaps of a member item overlapping between a plurality of virtual stores is collected, and the segment information is generated based on the collected number of overlaps.

With this structure, from the segment information based on the member item overlapping between the plurality of virtual stores, the similarity of segments between the virtual stores can be determined.

Preferably, in the virtual store provision system according to the present invention, the number of overlaps is a number of overlaps of a predetermined combination of a plurality of member items.

With this structure, the similarity and difference of segments between the virtual stores can be determined more accurately from the segment information based on not the number of overlaps of each member item but the number of overlaps of each combination of a plurality of member items.

Preferably, in the virtual store provision system according to the present invention, the segment information includes information obtained by weighting the number of overlaps based on the operation history for the overlapping member item.

With this structure, the segment information includes not the simple number of overlaps of the member item between the plurality of virtual stores but the information obtained by weighting the number of overlaps based on the operation history (e.g. the number of operations) of the member item relating to the number of overlaps. This further clarifies the similarity and difference of segments between the virtual stores.

Preferably, in the virtual store provision system according to the present invention, the predetermined requester includes the viewer.

With this structure, the viewer can smoothly find a desired virtual store based on the segment information.

Preferably, in the virtual store provision system according to the present invention, the predetermined requester includes the member.

With this structure, the member can obtain the segment information and improve the segment of the virtual store of the member.

Preferably, the virtual store provision system according to the present invention includes: a member information database configured to accumulate member information of the member; and a link item information provision unit configured to provide, to an other person selling the other-person sales item, link item information including the member information accumulated in the member information database for the member selecting the other-person sales item as the member item.

With this structure, the other person of the other-person virtual store can know, based on the link item information including the member information, what kind of people are interested in the sales item of the other person, and use the knowledge for a sales item selling strategy or a new sales item development strategy. Moreover, since the information is not information from the viewer who finds it bothersome to input personal information but the member information of the member that provides the member information in return to open the virtual store, the information of people interested in the other-person sales item can be acquired smoothly.

Preferably, the virtual store provision system according to the present invention includes an item selection information database configured to accumulate item selection information relating to an answer of the member to an item selection questionnaire issued to the member when the member selects the other-person sales item as the member item, wherein the link item information provision unit is configured to include, in the link item information, the item selection information relating to the other-person sales item of the other person.

With this structure, the other person of the other-person sales store can smoothly know the reason why the sales item of the other person is selected, from the item selection information included in the link item information. Moreover, since the item selection information is information of the member's answer to the item selection questionnaire, the information can be collected smoothly.

Preferably, in the virtual store provision system according to the present invention, the link item information includes information relating to the operation history for the member item hyperlinked to the other-person sales item relating to the link item information.

With this structure, the other person can know the member information of the member having the member item through which the other-person sales item as an item sold by the other person is viewed, based on the operation history (e.g. the number of operations) in the link item information.

### Brief Description of Drawings

FIG. 1 is a diagram illustrating an Internet environment to which a virtual store provision system is applied.
FIG. 2 is a diagram illustrating functional blocks in the virtual store provision system in the Internet environment in detail.
FIG. 3 is a flowchart of an admission process by the virtual store provision system.
FIG. 4 is an explanatory diagram of an operation of each member selecting a member item to be posted on a member virtual store of the member using an application provided form the virtual store provision system.
FIG. 5 is a diagram illustrating an example of a portal site of the virtual store provision system.
FIG. 6 is a diagram illustrating a browser screen used when a viewer searches for a desired member virtual store using a search range refine button.
FIG. 7 is a diagram illustrating an example of a web page of a member virtual store.
FIG. 8 is an explanatory diagram of the number of overlaps of each member item included in segment information.
FIG. 9 is a radar chart of the segment information.
FIG. 10 is an explanatory diagram of link item information provided from a link item information provision unit to another person of an other-person virtual store.

### Description of Embodiments

### [Overall system]

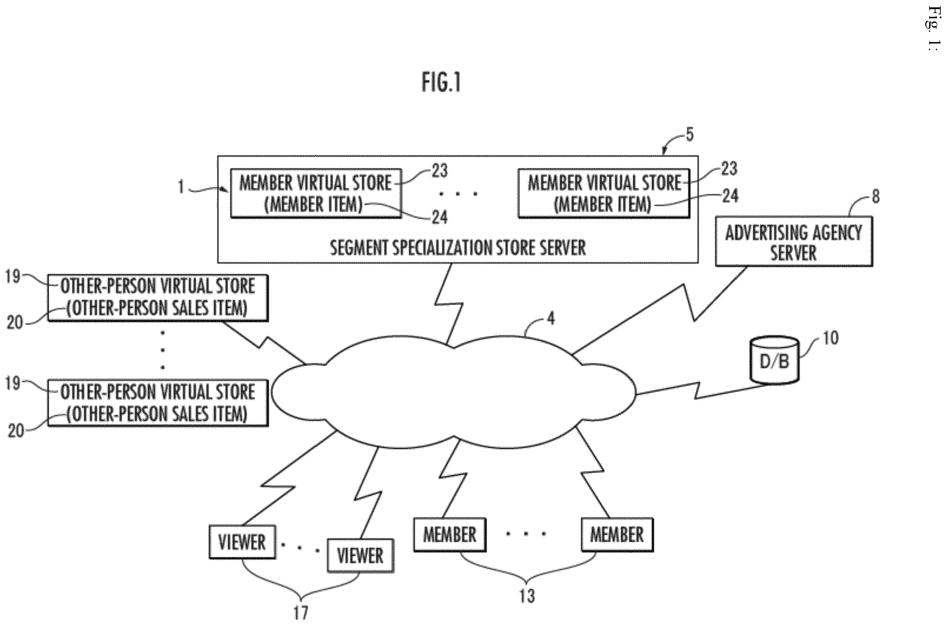

FIG. 1 is a diagram illustrating an Internet environment to which a virtual store provision system 1 is applied. The Internet 4 connects a segment specialization server 5, an advertising agency server 8, a database (D/B) 10, a plurality of members 13, a plurality of viewers 17, and a plurality of other-person virtual stores 19 to one another. To be exact, each of the members 13 and the viewers 17 is connected to the Internet 4 via an information device owned or temporarily borrowed by the member 13 or viewer 17.

The D/B 10 includes an operation history database, a member information database, and an item selection information database. The information device used by each of the members 13 and the viewers 17 is, for example, a smartphone, a tablet, or a personal computer. The other-person virtual stores 19 are each typically built in a server connected to the Internet 4.

The virtual store provision system 1 includes software implemented in the segment specialization server 5 connected to the Internet 4, and the D/B 10. The D/B 10 may be connected to the segment specialization server 5 not via the Internet 4 but via an intranet (not illustrated).

Each member 13 exclusively has a member virtual store 23 built by the virtual store provision system 1. Each member virtual store 23 is assigned a subdomain that belongs to a common root domain and is distinguishable from other subdomains. On each member virtual store 23, a member item 24 selected from other-person sales items 20 by the member 13 is posted with a hyperlink to the selected other-person sales item 20.

The plurality of other-person virtual stores 19 are connected to the Internet 4, and post other-person sales items 20 as products and/or services on their web pages in the form of images, text, or the like to sell the other-person sales items 20. Each viewer 17 can directly access the other-person virtual stores 19 from an information device of the viewer 17, and can also access the other-person virtual stores 19 by following the hyperlinks of the member items 24 in the member virtual stores 23 in the segment specialization server 5.

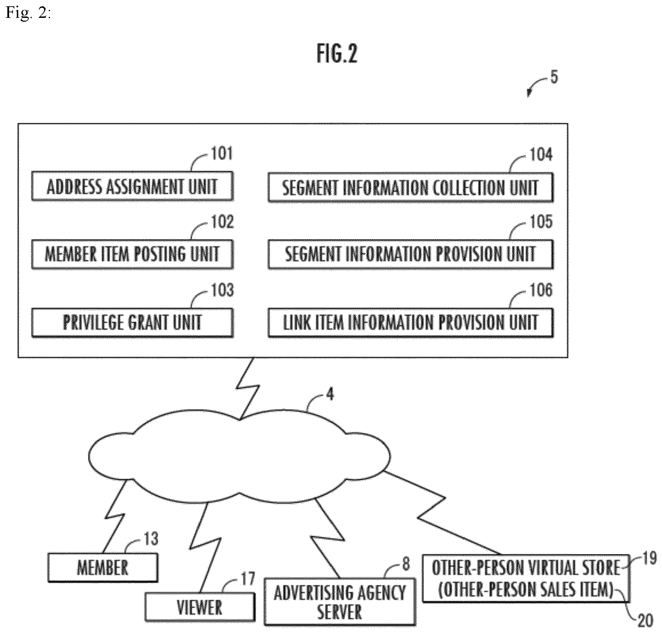

FIG. 2 is a diagram illustrating functional blocks in the virtual store provision system 1 in the Internet environment in detail. In FIG. 2, only one member 13, one viewer 17, and one other-person virtual store 19 are illustrated for simplicity's sake.

The virtual store provision system 1 includes an address assignment unit 101, a member item posting unit 102, a privilege grant unit 103, a segment information collection unit 104, a segment information provision unit 105, and a link item information provision unit 106. The segment specialization server 5 has a well-known internal structure of a server (not illustrated). The internal structure includes at least a CPU, RAM, ROM, an input-output I/F, a bus connecting these components, and a hard disk storing an OS and various application programs.

### [Admission process]

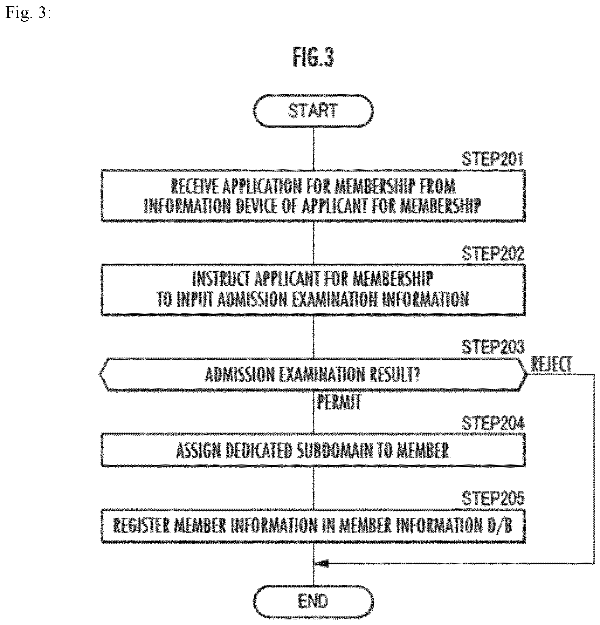

FIG. 3 is a flowchart of an admission process by the virtual store provision system 1. In STEP 201, the address assignment unit 101 receives an application for membership from an information device of an applicant for membership. When the applicant for membership is permitted to join, the applicant for membership becomes a member 13. Access to the virtual store provision system 1 from the applicant for membership is conducted on a browser in the information device of the applicant for membership by designating, with the browser, an admission acceptance web page of the virtual store provision system 1.

In STEP 202, the address assignment unit 101 instructs the applicant for membership to input admission examination information. Specifically, the admission examination information includes a set of personal information such as gender, age, address, telephone number, occupation, educational background, income, family structure, hobby, and bank account.

In STEP 203, the address assignment unit 101 performs admission examination on the applicant for membership based on the admission examination information. In the case where the address assignment unit 101 permits the applicant for membership to join as a result of the admission examination, the process advances to STEP 204. In the case where the address assignment unit 101 rejects the applicant for membership, the admission process ends.

In STEP 204, the address assignment unit 101 assigns a dedicated subdomain to the member 13.

In STEP 205, the address assignment unit 101 registers member information (including the foregoing personal information and subdomain) in the D/B 10. Thus, as the number of members 13 increases, member information is sequentially accumulated in the D/B 10.

After the admission, the member 13 can change the member information as appropriate according to a change in address, telephone number, and the like. Although the member information is collected at the time of the admission of the member 13 in this example, only information necessary for the admission examination may be collected at the time of the admission, with the other member information being collected at a predetermined time after the admission.

In STEP 206, the segment information collection unit 104 collects segment information indicating which segment the member virtual store 23 of the member 13 belongs to.

A segment is defined as a group of customers having common needs in the market and similar in item (product and service) recognition manner, valuing, and use method, and process to purchase, that is, purchase behavior. It is necessary to use axis suitable for dividing the market into parts each corresponding a specific segment. The virtual store provision system 1 defines each of segments of items by one or more axes.

In the virtual store provision system 1, a plurality of axes can be set in order to identify segments. If segments subjected to comparison have different occupancy ranges on each axis, the two segments are determined to be different. For example, male age is set as an axis defining groups of customers. In the case where a first segment occupies a range of 10 years to 20 years on the axis and a second segment occupies a range of 50 years to 70 years on the axis, the first segment and the second segment are determined to be different segments on the axis. In the case where the first segment occupies a range of 10 years to 30 years on the axis and the second segment occupies a range of 15 years to 20 years on the axis, the first segment and the second segment are determined to be segments that partially overlap on the axis.

In the virtual store provision system 1, occupancy ranges of segments on each axis are not limited to be defined by numeric values. Occupancy ranges not defined by numeric values, such as genres of member items 24, are also applicable. In the virtual store provision system 1, a plurality of (at least two, preferably at least three or four) axes for identifying segments are set, as mentioned above. For example, male age is set as a first axis relating to customers, and region (an example of an axis in which occupancy ranges are not defined by numeric values) is set as a second axis relating to customers. In the case where the first segment occupies a coordinate range of 30 years to 40 years on the first axis and the second segment occupies a coordinate range of 30 years to 40 years on the first axis, the two segments are the same segment on the first axis. In the case where the first segment occupies Hokkaido on the second axis and the second segment occupies Kyushu on the second axis, the two segments are different segments on the second axis. That is, in the case where the segments subjected to comparison are different on at least one axis, the two segments are different segments.

Thus, in the virtual store provision system 1, it is possible to appropriately set axes for identifying segments and identify a segment of each member virtual store 23. When identifying the segment of each member virtual store 23, it is not necessary to condition that all member items 24 of the member virtual store 23 belong to the same segment. If at least a predetermined proportion (e.g. 90%) of the member items 24 belong to the same segment, the segment can be determined as the segment of the member virtual store 23. Each member item 24 not belonging to the segment is processed as an exceptional member item 24 in the virtual store provision system 1.

Specifically, the segment information collection unit 104 performs segment information collection by issuing a segment survey questionnaire to cause the member 13 to answer a plurality of question items.

For example, the question items include survey items for customers as target (= viewers 17) and survey items for member items 24. The survey items for customers include gender (male/female), age group (e.g. 10s, 20s, ...), region of address (e.g. Hokkaido, Kyushu, Kanagawa Prefecture, Chiba City), occupation (e.g. student), hobby (e.g. movie watching, travel, sport, fishing), and the like. The survey items for member items 24 include genre (e.g. men's kimono) and price range (e.g. 10,000 yen or less).

The segment of each member virtual store 23 can be basically identified based on several axes (referred to as "basic axes" as appropriate) that are determined based on the member's answers to the survey items for customers as target (= viewers 17) in the segment survey questionnaire. Alternatively, the segment of each member virtual store 23 may be identified based on both the basic axes and axes (referred to as "additional axes" as appropriate) that are determined based on the member's answers to the survey items for member items 24 with respect to the basic axes, or may be identified based on only the additional axes in some cases.

The segment information is information that can identify the segment determined in this way, and is generated based on the determined segment.

### [Selection of member item]

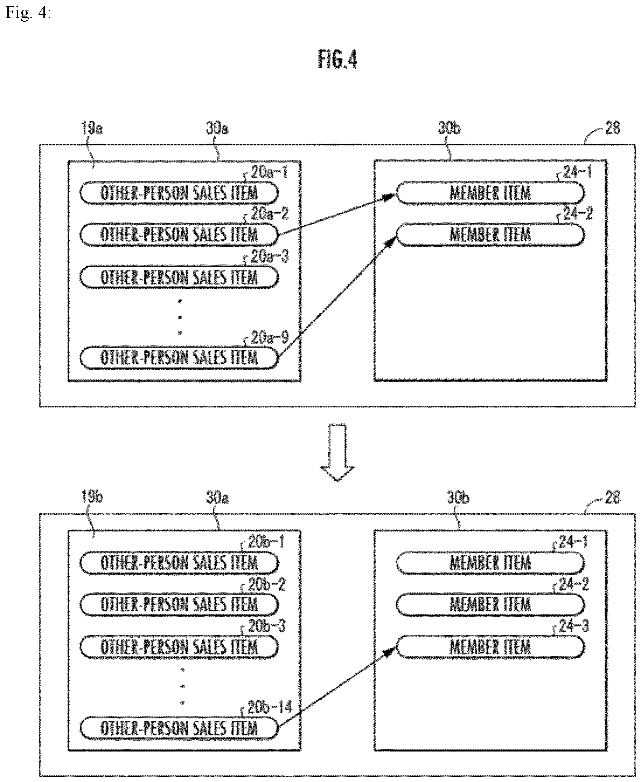

FIG. 4 is an explanatory diagram of an operation of each member 13 selecting one or more member items 24 to be posted on the member virtual store 23 of the member 13 using an application provided from the virtual store provision system 1. The application may be a dedicated application only for the process of each member 13 selecting each member item 24 of the member virtual store 23, or may be included as part of functions in a member support application as an integrated application.

The member 13 starts the application in the information device (e.g. personal computer) of the member 13, and displays a member item selection screen 28 illustrated in FIG. 4 as a predetermined screen on a display unit.

The member item selection screen 28 includes an other-person web part 30a on the left and a member web part 30b on the right. In each of the upper member item selection screen 28 and the lower member item selection screen 28 in FIG. 4, the member web part 30b on the right corresponds to a web page of the member virtual store 23 of the member 13. On the other hand, the other-person web part 30a on the left displays a web page of an other-person virtual store 19 different between the upper and lower member item selection screens 28. For convenience of explanation, to distinguish the two other-person virtual stores 19, the other-person virtual store of the other-person web part 30a in the upper member item selection screen 28 is given reference sign " 19a", and the other-person virtual store of the other-person web part 30a in the lower member item selection screen 28 is given reference sign "19b".

Other-person sales items 20a-1 to 20a-9 are displayed in the other-person web part 30a of the other-person virtual store 19a. Other-person sales items 20b-1 to 20b-14 are displayed in the other-person web part 30a of the other-person virtual store 19b. In FIG. 4, the other-person sales items 20a-1 to 20a-9 and 20b-1 to 20b-14 are depicted in blocks for simplification. In actual model of the invention, they are shown not in blocks but in images, icons, or text from which viewers 17 can concretely understand what items of products or services (e.g. reservation of accommodation or concert or reservation of transportation) are presented.

The member 13 selects the other-person sales items 20a-2 and 20a-9 from the other-person sales items 20a-1 to 20a-9 in the other-person virtual store 19a, as member items 24-1 and 24-2 of the member virtual store 23 of the member 13. The member 13 also selects the other-person sales item 20b-14 from the other-person sales items 20b-1 to 20b-14 in the other-person virtual store 19b, as a member item 24-3 of the member virtual store 23 of the member 13. The member items 24-1 to 24-3 are provided with link item information to the other-person sales items 20a-2, 20a-9, and 20b-14, respectively.

The operation of selecting the other-person sales items 20a-2, 20a-9, and 20b-14 on the member item selection screen 28 by the member 13 is performed by drag and drop of the other-person sales items 20a-2, 20a-9, and 20b-14 from the other-person web part 30a to the member web part 30b. As a result, the member items 24-1, 24-2, and 24-3 become the same images as the other-person sales items 20a-2, 20a-9, and 20b-14 of the hyperlink destinations.

After the selection of the member items 24 of the member virtual store 23 of the member 13 by the member 13 is completed, the application ends. Subsequently, the application may be started again to select and add a member item 24 as appropriate. To delete a member item 24, the member item 24 to be deleted is moved from the member web part 30b to the outside by drag and drop.

The application can issue an item selection reason questionnaire to the member 13 when the member 13 newly adds a member item 24. Specifically, the link item information provision unit 106 issues the item selection reason questionnaire. The link item information provision unit 106 accumulates answer information relating to the member 13's answers to the item selection reason questionnaire in the D/B 10.

A viewer 17 designates a subdomain of a member virtual store 23, and views member items 24 in the designated member virtual store 23. If the viewer 17 finds a member item 24 which the viewer 17 likes, the viewer 17 moves a cursor to the member item 24 which the viewer 17 likes, and performs a hyperlink use operation such as click or tap. As a result, the screen of the display unit in the information device of the viewer 17 switches from the web page of the member virtual store 23 to the web page of the other-person virtual store 19 on which the other-person sales item 20 of the hyperlink destination is posted.

For the hyperlink use operation on each member item 24 of each member virtual store 23 by the viewer 17, the segment information provision unit 105 accumulates the hyperlink use operation in the D/B 10 as hyperlink operation history. The operation history includes the date and time of the operation.

The viewer 17 performs a purchase procedure for the other-person sales item 20 of the hyperlink destination in the web page of the other-person virtual store 19 after moving through the hyperlink. The purchase procedure includes payment of money, arrangement of delivery, and the like. Thus, each member virtual store 23 simply introduces the other-person sales item 20 of the hyperlink destination by posting the hyperlinked member item 24, so that the member 13 of the member virtual store 23 can omit a complicated purchase procedure with the viewer 17.

Therefore, the member 13 can open and operate the member virtual store 23 with reduced funds, labor, and bankruptcy risk.

The advertising agency server 8 is managed by an advertising agency, and references to the operation history in the D/B 10 periodically or as appropriate, or copies the operation history to a D/B (not illustrated) in the advertising agency server 8. Based on the operation history, the advertising agency server 8 collects advertisement fee from the other person of the other-person virtual store 19 in the form of money. Specifically, the advertising agency server 8 collects, from the other-person virtual store 19, money corresponding to the number of hyperlink operations for the other-person sales item 20 of the other-person virtual store 19 of the other person from the member virtual store 23 in the virtual store provision system 1.

The advertising agency server 8 distributes the advertisement fee collected from the other-person virtual store 19 to the provider (also the owner) of the virtual store provision system 1 and the member 13 of the member virtual store 23 subjected to the hyperlink use operation by the viewer 17, periodically or as appropriate. Here, the advertising agency server 8 receives collection handling fee of a predetermined ratio to the advertisement fee. The advertising agency server 8 then distributes the remaining amount between the provider of the virtual store provision system 1 and the member 13 at a predetermined distribution ratio.

### [Browser screen of viewer]

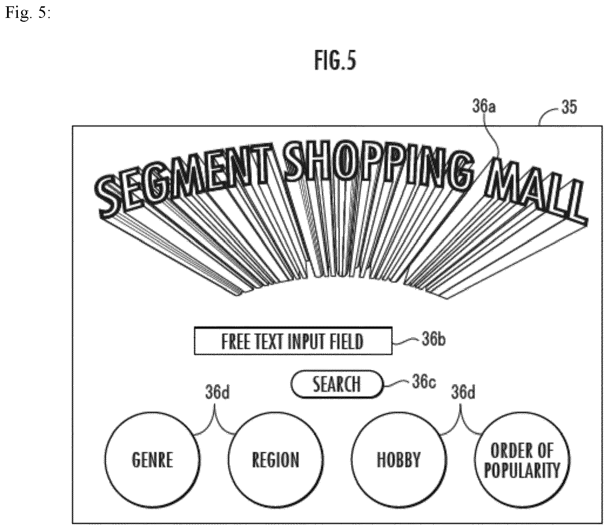

FIG. 5 illustrates an example of a portal site of the virtual store provision system 1. A web page 35 of the portal site has the address of the foregoing domain. The web page 35 displays a title 36a "segment shopping mall", a free text input field 36b for the viewer 17 to input a segment specialization item-related phrase when searching for a member virtual store 23, a search button 36c, and a refine button 36d.

The web page 35 displays a plurality of refine buttons 36d. In this example, the viewer 17 can narrow search on the member virtual stores 23 in the domain by genre, region, hobby, and/or order of popularity, and perform the search. The viewer 17 can thus smoothly search for a member virtual store 23 specialized to a segment desired by the viewer 17.

The viewer 17 visiting the web page 35 attempts to search for a member virtual store 23 on which member items 24 specialized or refined to the segment the viewer 17 wants to find are posted. The portal site provides a plurality of search methods.

A first search method is a method of inputting one or more search terms to the free text input field 36b, as in Google® search portal. The viewer 17 can freely input the search term. For example, the viewer 17 can freely input, to the free text input field 36b, not only a search term (e.g. men's clothing, television) of a common item name from which the corresponding segment is readily recognizable, but also a search term (e.g. "high school girl", "60 years old", "Shinjuku", and "South Sea Island") from which a core concept of the segment is roughly recognizable. After inputting the search term to the free text input field 36b, the viewer 17 clicks the search button 36c.

When the search button 36c is clicked, the segment information provision unit 105 searches for member virtual stores 23 having high consistency with the search term input to the free text input field 36b by the viewer 17. The segment information provision unit 105 then displays a list of corresponding member virtual stores 23 in descending order of consistency with the search term, as a search result screen (not illustrated) on the browser of the viewer 17. The level of consistency is determined based on the answer information of each member 13 to the segment survey questionnaire issued to the member 13 in STEP 206. The segment information is generated based on the answer information and stored in the D/B 10.

The segment survey questionnaire issued to each member 13 may include an item for causing the member 13 to answer, in a word or two, a phrase corresponding to the concept of the segment, besides question items (e.g. gender) for causing the member 13 to select one of a plurality of choices. In such a case, for example, the member 13 can answer "high school girl", "60 years old", "Shinjuku", and/or "South Sea Island" as a phrase for a theme of the member virtual store 23 of the member 13.

That is, in the virtual store provision system 1, the theme can also be used as an axis when identifying the segment of each member virtual store 23. Specifically, for "high school girl", "60 years old", "Shinjuku", and "South Sea Island" as a theme axis, an occupation axis, an age axis, a region axis, and a travel destination axis can be respectively set.

A second search method is a method of selecting one of the plurality of refine buttons 36d. The refine buttons 36d enable narrowing the search range by genre, region, hobby, and order of popularity.

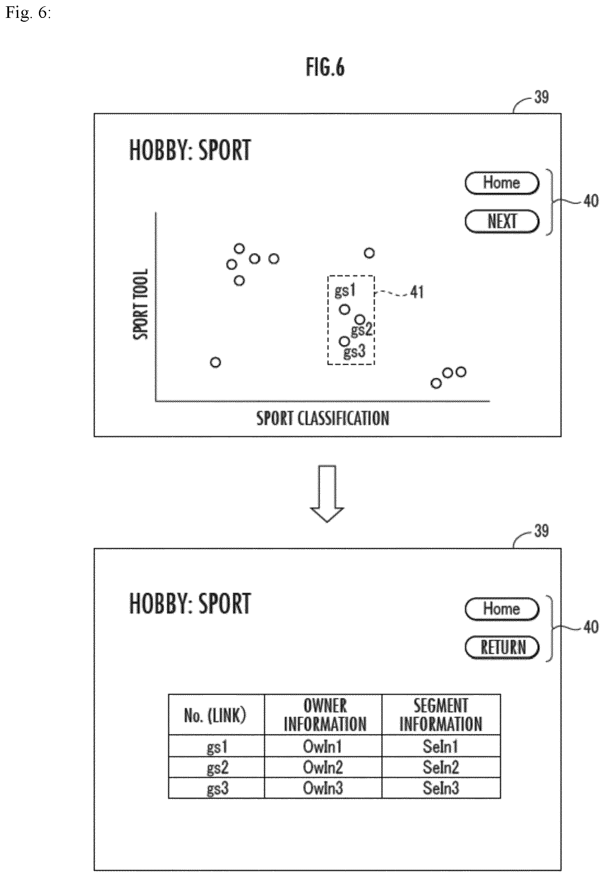

FIG. 6 illustrates a browser screen 39 used when the viewer 17 searches for a desired member virtual store 23 using the refine buttons 36d. Suppose the viewer 17 selects "hobby" from the refine buttons 36d in FIG. 5. In response, a hobby list is displayed, and the browser screen 39 shows a screen when the viewer 17 selects sport from the hobby list.

The browser screen 39 is a screen in which the sport genre as one axis is further divided between a horizontal axis and a vertical axis to specify a segment to which each member item 24 of the sport genre belongs. The horizontal axis is, for example, an axis that divides sport classifications such as track and field, ball sport (e.g. soccer and baseball), and gymnastics as a small genre belonging to a large genre of sport. The vertical axis is, for example, an axis that divides sport tools (e.g. balls, bats, shoes, and clothes) as another small genre belonging to the large genre of sport. Each mark (white circle) is displayed at the center of the range occupied by each member item 24 on the horizontal axis and the vertical axis.

The viewer 17 designates a range corresponding to his or her preference on the browser screen 39 in FIG. 6, by drawing an enclosing line 41 on the browser screen 39 with a mouse. Inside the enclosing line 41, three marks gs1 to gs3 (each of which corresponds to a member virtual store 23) are included. After drawing the enclosing line 41, the viewer 17 clicks or taps a part inside the enclosing line 41. As a result, the browser screen 39 changes from the upper browser screen 39 to the lower browser screen 39 in FIG. 6.

On the lower browser screen 39, information of gs1 to gs3 inside the enclosing line 41 is displayed in a table form. In the table, gs1 to gs3 in the No. column are hyperlinked. When the viewer 17 clicks or taps (hereafter referred to as "clicks or the like") a desired one of gs1 to gs3, the browser screen 39 switches to the web page of the corresponding member virtual store 23.

When the viewer 17 clicks or the like owner information of one of gs1 to gs3, the browser screen 39 switches to a browser screen 39 of the member information (owner information) of the corresponding member 13. When the viewer 17 clicks or the like text of one of segment information SeIn1 to SeIn3, the corresponding segment information is displayed on the browser screen 39.

The viewer 17 can search for a member virtual store 23 that matches his or her desire, by referencing to the owner information and the segment information. The segment information that can be referenced to by the viewer 17 on the browser screen 39 is the answers of each member 13 to the foregoing segment survey questionnaire or information obtained by processing the answers so as to be user-friendly.

The browser screen 39 includes move buttons 40. Of the move buttons 40 illustrated in FIG. 6, when the viewer 17 clicks or the like the "home" button, the web page 35 in FIG. 5 is displayed. When the viewer 17 clicks or the like the "next" button, the browser screen 39 switches from the upper browser screen 39 to the lower browser screen 39 in FIG. 6. When the viewer 17 clicks or the like the "return" button, the browser screen 39 switches from the lower browser screen 39 to the upper browser screen 39 in FIG. 6.

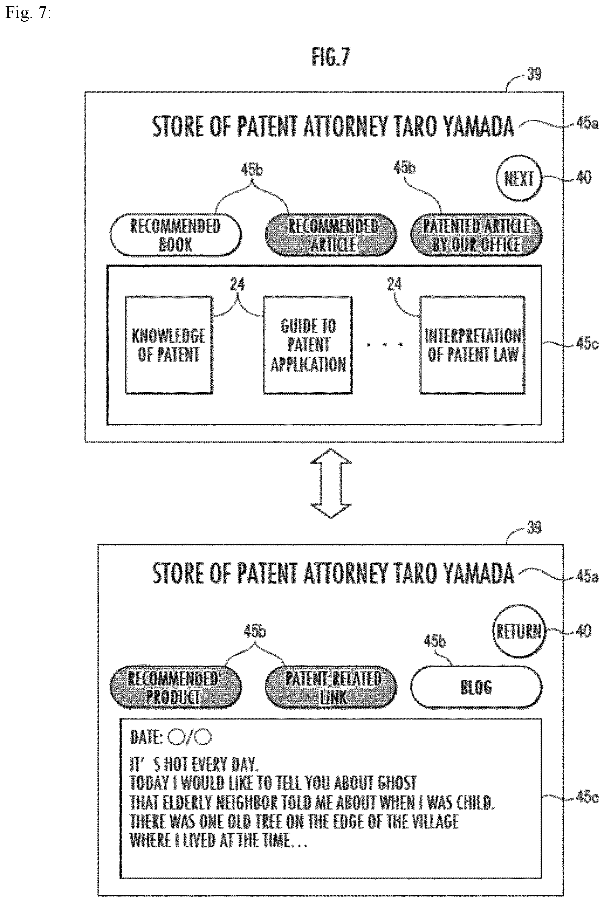

FIG. 7 illustrates an example of the web page of the member virtual store 23. The web page of the member virtual store 23 is displayed on the display unit of the information device of the viewer 17 as the browser screen 39. The browser screen 39 includes a move button 40, a virtual store name 45a, tags 45b, and an item display field 45c. To move from this browser screen 39 to the previous page, not a move button 40 but a "back" icon, a menu, or the like (not illustrated) displayed at the upper edge of the browser is used, for example.

The virtual store name 45a is "Store of Patent Attorney Taro Yamada". The tags 45b are tags of recommended books, recommended articles, etc. The item display field 45c displays member items 24 belonging to the selected tag 45b. In the example in FIG. 7, the tag 45b "recommended book" is selected on the upper browser screen 39, and the tag 45b "blog" is selected on the lower browser screen 39.

The blog is posted on the member virtual store 23 by the member 13 as the owner of the member virtual store 23 in order to deepen the connection with the viewer 17, apart from the posting of the member items 24. Although the blog in FIG. 7 is in text only, a photographic image may be added as appropriate to use the blog as an example of information transmission from the member 13 to the viewer 17 and thus increase the attractiveness of the member virtual store 23.

When the viewer 17 clicks or the like a desired tag 45b, the display of the item display field 45c is switched. On the upper browser screen 39 in FIG. 7, the recommended books are selected as the item display field 45c. When the viewer 17 clicks or the like the move button 40 on the upper browser screen 39, the browser screen 39 switches from the upper browser screen 39 to the lower browser screen 39 or from the lower browser screen 39 to the upper browser screen 39. In this example, not the whole browser screen 39 but the item display field 45c in the browser screen 39 is switched. On the lower browser screen 39, the blog is selected as the item display field 45c.

When the viewer 17 clicks or the like a desired member item 24 on the browser screen 39, the screen switches to the web page of the other-person virtual store 19 on which the other-person sales item 20 to which the clicked member item 24 is hyperlinked is posted. When the viewer 17 purchases or becomes more interested in the member item 24 posted on the member virtual store 23, the viewer 17 clicks or the like the member item 24 to start the hyperlink. Consequently, the viewer 17 moves to the web page of the other-person sales item 20 of the hyperlink destination, and purchases the other-person sales item 20 or views another other-person sales item 20 (an item to which the member item 24 of the member virtual store 23 is not hyperlinked) in the other-person virtual store 19 on which the other-person sales item 20 is posted.

The member 13 can attach text of a note or the like for the viewer 17 to each member item 24 in the member virtual store 23. The note relates to, for example, the reason why the member 13 has selected the member item 24. Such a note helps the viewer 17 to know each member item 24 more deeply.

### [Segment information]

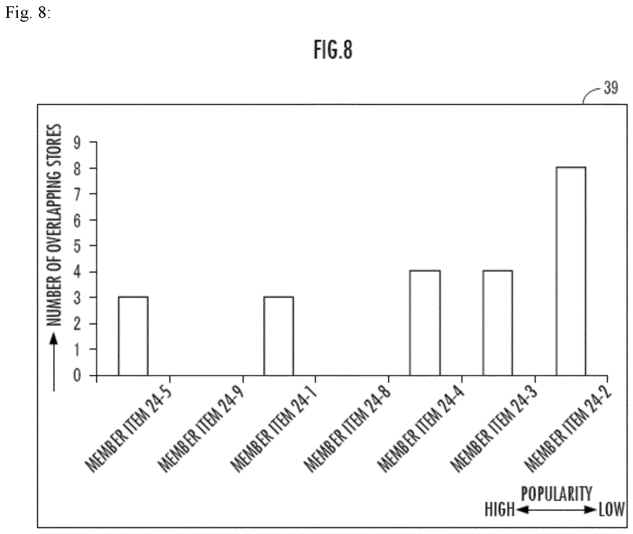

FIG. 8 is an explanatory diagram of the number of overlaps of each member item 24 included in the segment information. There is a possibility that the same member item 24 is selected and posted by the respective members 13 of a plurality of member virtual stores 23. In the case where many member virtual stores 23 post the same member item 24, the segments of the member virtual stores 23 are likely to be similar.

Each member 13 can enhance the attractiveness of the member virtual store 23 of the member 13 for the viewer 17, by minimizing the overlap of the segment of the member virtual store 23 of the member 13 with the segments of the member virtual stores 23 of the other members 13, i.e. by differentiating the member virtual store 23 of the member 13 from the member virtual stores 23 of the other members 13 by the uniqueness of the segment.

The segment information collection unit 104 surveys, when a member item 24 overlaps between member virtual stores 23, the number of overlapping member virtual stores 23. The segment information includes information generated based on the number.

The segment information provision unit 105 receives a request to provide segment information from a member 13 and surveys, for each member item 24 posted on the member virtual store 23 of the member 13, the number of member virtual stores 23 of other members 13 posting the same member item 24. The number is counted as the number of overlaps in which the member 13 (≠ other members 13) is included. FIG. 8 illustrates survey results. The survey results are displayed as part of segment information on the screen of the browser or the member support application of the information device of the member 13 making the request to the segment information provision unit 105.

In FIG. 8, the horizontal axis indicates member items 24 posted on the member virtual store 23 of the member 13 making the request to provide the number of overlaps to the segment information provision unit 105, in order of popularity. In the example in FIG. 8, member items 24-5, 24-9, 24-1, 24-8, 24-3, and 24-2 are popular in this order in the member virtual store 23 of the member 13.

Specifically, the order of popularity is the descending order of the number of clicks or the like (the number of hyperlink use operations) on each member item 24 by viewers 17 in the member virtual store 23 of the member 13. The number of clicks or the like is typically the number in a most recent predetermined period. Alternatively, the member 13 may be able to designate any period with regard to the descending order of the number of clicks or the like.

Although the number of overlapping member virtual stores 23 is surveyed for each individual member item 24 in FIG. 8, it is also possible to select some combinations of a plurality of member items 24 and display the number of overlaps for each combination.

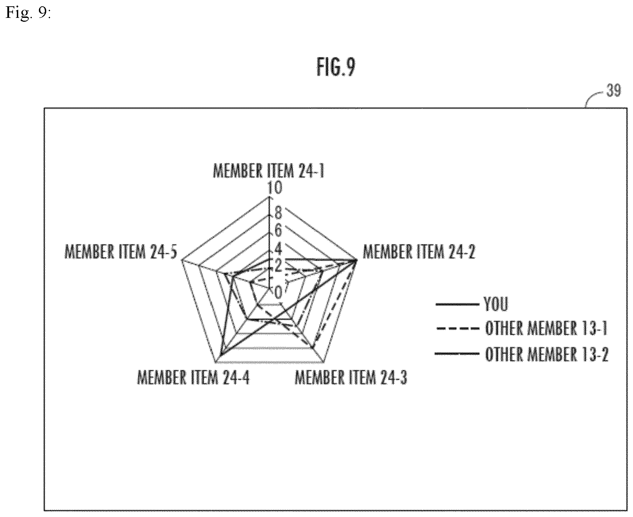

FIG. 9 is a radar chart of segment information. When the same member items 24 as member items 24 in the member virtual store 23 of the member 13 are posted by member virtual stores 23 of other members 13-1 and 13-2, the radar chart serves as useful segment information for identifying their segments. In the radar chart, the radial axis represents the number of clicks (including the number of taps) by the viewers 17. In FIG. 9, only the member items overlapping with member items 24 in the member virtual stores 23 of the other members 13-1 and 13-2 from among the member items posted on the member virtual store 23 of the member 13 ("you" in FIG. 9) are extracted as member items 24-1 to 24-5.

From the segment information of the radar chart in FIG. 9, each member 13 can know which one of his or her own member items overlaps to one of the other member's member items. In FIG. 9, for example the member items 24-1 to 24-5 of the member 13 overlap to the member items 24-1 to 24-5 of the other members 12-1 and 12-2. Also each member 13 can compare to other members 12-1 and 12-2 in terms of a number of clicks or the like on the overlapping items 24-1 to 24-5. The number of clicks or the like on each of overlapping member items 24-1 to 24-5 means weighting of the member virtual stores 23 in terms of those items. Therefore the radar chart indicates segment information obtained by weighting of the overlapping member items 24-1 to 24-5 among the member virtual stores 23.

In the radar chart in FIG. 9, the weight (e.g. the number of clicks as operation history) for each of the individual member items 24-1 to 24-5 is indicated. Instead of the individual member items 24-1 to 24-5, combinations of a plurality of member items may be set from among the member items 24-1 to 24-5. A radar chart indicating the total number of clicks for each combination may then be presented to the member 13.

### [Link item information]

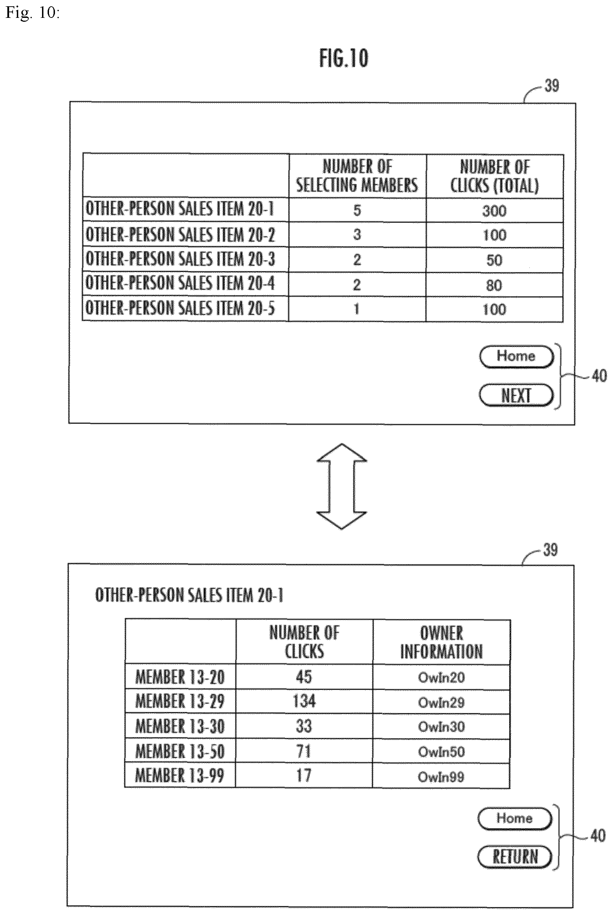

FIG. 10 is an explanatory diagram of link item information provided from the link item information provision unit 106 to another person of each other-person virtual store 19. If the other person of the other-person virtual store 19 can know what kind of people are interested in his or her sales items, the other person can use the knowledge for a sales strategy for his or her sales items (= other-person sales items 20) or a strategy for newly developed products. For the other person selling other-person sales items 20, personal information of people who purchase the other-person sales items 20 is useful information. Based on the personal information, the other person can reaffirm which people or group is interested in his or her sales items, or learn that individuals or a group not intended by the other person is interested in his or her sales items.

It is, however, difficult for the other person selling other-person sales items 20 to acquire the personal information of each viewer 17. This is because the viewer 17 does not want his or her personal information to be known to others, and feels troublesome to answer a predetermined questionnaire every time he or she purchases a sale item.

The virtual store provision system 1 overcomes such problems. The virtual store provision system 1 references to the member information (including personal information) of each member 13 upon admission and the answer information to the item selection reason questionnaire issued when the member 13 selects a member item 24. The virtual store provision system 1 then provides, to the other person of the other-person virtual store 19, link item information generated based on the member information and/or the answer information of each member 13 who selects an other-person sales item 20 of the other-person virtual store 19.

In FIG. 10, other-person sales items 20-1 to 20-5 in the upper table are other-person sales items 20 posted on an other-person virtual store 19 of another person to which the link item information in FIG. 10 is provided. When the other person clicks or the like the other-person sales item 20-1 in the upper table, the browser screen 39 switches to a browser screen 39 displaying members 13-20, 13-29, 13-30, 13-50, and 13-99 in the lower table.

For each of the other-person sales items 20-1 to 20-5, the number of members 13 selecting the other-person sales item as a member item 24 in the virtual store provision system 1 is displayed. Moreover, the number of clicks by viewers 17 is displayed. The number of clicks in the upper table in FIG. 10 is more precisely the number of clicks, taps, or the like (the number of hyperlink use operations). The number of clicks is not the number of clicks in each member virtual store, but the number of clicks in the whole virtual store provision system 1. The number of clicks by viewers 17 is the number of clicks in a most recent predetermined period or in a past predetermined period.

In the lower table in FIG. 10, the members 13 each using the other-person sales item 20-1 of the other person as a member item 24 are displayed so as to be distinguishable from one another. For each member 13, the number of clicks for the other-person virtual store 191 by viewers 17 is displayed. When the other person clicks a desired member 13 in the lower table in FIG. 10, link item information for the member 13 is displayed on the browser screen 39 to provide the link item information to the other person.

### [Modifications]

A privilege granted to each member 13 by the privilege grant unit 103 is not limited to money. The privilege may be a voucher (including a virtual voucher usable only on the Internet) that can be exchanged for a product or a service at other virtual stores on the Internet 4 or real stores. The privilege may be a coupon that cannot be exchanged but entitles the member 13 to a discount or preferential treatment.

The member information (including personal information) described in STEP 202 is an example. For example, the income may be omitted, or may be expressed in rough stages instead of concrete numeric values.

A person in charge of the virtual store provision system 1 may give punishment such as withdrawal to a member 13 who submitted false member information, behaved undesirably after admission, etc.

Each member 13 can mix product member items 24 and service member items 24 as member items 24 of the member 13. Virtual stores such as Amazon® aim to quantitatively expand all items of products and services existing in the world. Each member 13, on the other hand, aims to specialize the member virtual store 23 of the member 13 to a specific segment so that each viewer 17 can efficiently find a suitable item in each segment.

### Description of Reference Numerals

- 1: virtual store provision system
- 4: Internet
- 10: D/B
- 13: member
- 17: viewer
- 19: other-person virtual store
- 20: other-person sales item
- 23: member virtual store
- 24: member item
- 101: address assignment unit
- 102: member item posting unit
- 103: privilege grant unit
- 104: segment information collection unit
- 105: segment information provision unit
- 106: link item information provision unit

## Claims

1. A virtual store provision system comprising:
an address assignment unit configured to assign, to each member, a web address of a virtual store of the member;
a member item posting unit configured to post an other-person sales item selected by the member from other-person sales items posted and sold on an other-person virtual store on an Internet, on the virtual store of the member as a member item hyperlinked to the selected other-person sales item;
an operation history database configured to accumulate hyperlink operation history by a viewer, for each member item of the member; and
a privilege grant unit configured to grant a privilege to the member based on the operation history in the operation history database.

2. The virtual store provision system according to claim 1, comprising:
a segment information collection unit configured to collect segment information indicating which segment member items of the virtual store of the member are specialized to; and
a segment information provision unit configured to provide the segment information collected by the segment information collection unit, in response to a request from a predetermined requester.

3. The virtual store provision system according to claim 2, wherein an answer of the member to a segment survey questionnaire issued to the member is collected, and the segment information is generated based on the collected answer to the segment survey questionnaire.

4. The virtual store provision system according to claim 2 or 3, wherein a number of overlaps of a member item overlapping between a plurality of virtual stores is collected, and the segment information is generated based on the collected number of overlaps.

5. The virtual store provision system according to claim 4, wherein the number of overlaps is a number of overlaps of a predetermined combination of a plurality of member items.

6. The virtual store provision system according to claim 4 or 5, wherein the segment information includes information obtained by weighting the number of overlaps based on the operation history for the overlapping member item.

7. The virtual store provision system according to any one of claims 2 to 6, wherein the predetermined requester includes the viewer.

8. The virtual store provision system according to any one of claims 2 to 7, wherein the predetermined requester includes the member.

9. The virtual store provision system according to any one of claims 1 to 8, comprising:
a member information database configured to accumulate member information of the member; and
a link item information provision unit configured to provide, to an other person selling the other-person sales item, link item information including the member information accumulated in the member information database for the member selecting the other-person sales item as the member item.

10. The virtual store provision system according to claim 9, comprising
an item selection information database configured to accumulate item selection information relating to an answer of the member to an item selection questionnaire issued to the member when the member selects the other-person sales item as the member item,
wherein the link item information provision unit is configured to include, in the link item information, the item selection information relating to the other-person sales item of the other person.

11. The virtual store provision system according to claim 9 or 10, wherein the link item information includes information relating to the operation history for the member item hyperlinked to the other-person sales item relating to the link item information.
